# EUROPÄISCHE PATENTSCHRIFT

(11) **EP 1 588 979 B1**
(45) Veröffentlichungstag und Bekanntmachung des Hinweises auf die Patenterteilung: **26.11.2014**
(21) Anmeldenummer: 05007977.1
(22) Anmeldetag: 12.04.2005
(51) Int. Cl.: B66F 9/075, B60G 17/005

(54) **Flurförderzeug, insbesondere Gabelhubwagen**
Industrial truck, in particular forklift truck
Chariot de manutention, en particulier chariot élévateur à fourche

(30) Priorität: 20.04.2004 DE 102004019072
(43) Veröffentlichungstag der Anmeldung: 26.10.2005
(73) Patentinhaber: OM Carrelli Elevatori S.p.A., 20020 Lainate (MI) (IT)
(72) Erfinder: Hoock, Michael, 22299 Hamburg (DE); Mariotti, Fabio, 42016 Guastala (RE) (IT)
(74) Vertreter: Geirhos, Johann

(56) Entgegenhaltungen:
- EP-A2- 0 867 315
- DE-C2- 19 753 412
- JP-A- 2000 062 428
- US-A- 5 845 896

## Beschreibung

Die Erfindung betrifft ein Flurförderzeug, insbesondere Gabelhubwagen, mit einem Antriebsteil und einem Lastteil, wobei im Bereich des Lastteils zumindest zwei Lastrollen und im Bereich des Antriebsteils zumindest ein lenkbares Antriebsrad und mindestens eine Schwenkrolle angeordnet sind, die um eine vertikale Achse drehbar und vertikal bewegbar angeordnet ist und mittels einer Feder-Dämpfer-Einrichtung abgestützt ist.

Derartige Flurförderzeuge sind beispielsweise als deichselgeführte Mitgängerfahrzeuge oder als Hubwagen mit einem Fahrerstand bzw. einem Fahrersitz bekannt. Der Lastteil eines derartigen Flurförderzeugs ist mittels zweier Lastrollen auf der Fahrbahn abgestützt. Das Antriebsteil stützt sich mit dem Antriebsrad, das vorzugsweise starr am Flurförderzeug befestigt ist auf der Farbahn ab. Zur Stabilitätserhöhung ist am Antriebsteil zumindest eine Schwenkrolle vorgesehen, die vertikal bewegbar und drehbar am Antriebsteil gelagert ist. Hierbei sind Bauformen bekannt, bei denen das Antriebsrad seitlich im Abstand zur Fahrzeuglängsachse angeordnet ist und auf der gegenüberliegenden Seite eine von der Fahrzeuglängsachse beabstandete Schwenkrolle angeordnet ist. Neben derartigen Flurförderzeug mit einem Vierradfahrwerk sind ebenfalls Flurförderzeuge mit einem Fünfradfahrwerk bekannt, bei denen das Antriebsrad mittig am Antriebsteil befestigt ist und zwei Schwenkrollen an den Seiten des Antriebsteils beabstandet zur Fahrzeuglängsachse angeordnet sind.

Die Schwenkrollen sind mittels einer Feder-Dämpfer-Einrichtung auf der Fahrbahn abgestützt, wobei die Feder der Feder-Dämpfer-Einrichtung die der Radaufstandskraft entgegenwirkende Abstützkraft der Schwenkrolle bestimmt. Durch die Federung der Schwenkrollen wird das Flurförderzeug zu einem schwingungsfähigen System, wobei zur Schwingungsdämpfung die Feder-Dämpfer-Einrichtung mit einem Dämpfungsmittel versehen ist.

Ein gattungsgemäßes Flurförderzeug ist aus der DE 197 53 412 C2 bekannt. Die Schwenkrolle ist in einer um eine horizontale Achse schwenkbaren Schwinge gelagert, an der eine Schraubenfeder angreift. Von der Einfederung der Feder wird die der Radaufstandskraft entgegenwirkende Abstützkraft der Schwenkrolle bestimmt. Als Dämpfungsmittel sind hydraulische Zylinderstoßdämpfer vorgesehen, die seitlich neben der Stützrolle an der Schwinge angeordnet sind. Die Zylinderstoßdämpfer wirken bei einer Einfederung der Schwenkrolle. Bei einer Ausfederung der Schwenkrolle entfalten die Zylinderstoßdämpfer keine dämpfende Wirkung. Hierdurch kann es insbesondere bei einer Kurvenfahrt des Flurförderzeugs an der kurveninneren Schwenkrolle durch eine abnehmende Radaufstandskraft zu einem schnellen Ausfedem kommen und durch die Wirkung der Schraubenfeder eine die Neigung des Flurförderzeugs unterstützende Kraft auftreten, wodurch hohe Rollwinkel des Flurförderzeugs um die Flurförderzeuglängsachse auftreten können, die zu einer geringen Kippstabilität des Flurförderzeugs führen. Zudem wird bedingt durch die von der Schraubenfeder bestimmte Abstützkraft der Schwenkrolle in einem derartigen Betriebszustand die Radlast des Antriebsrad reduziert, wodurch geringere Brems- und Antriebskräfte übertragen werden können und somit das Flurförderzeug insbesondere bei einer Kurvenfahrt eine geringe Fahrstabilität aufweist. Durch das schnelle und ungedämpfte Ausfedem der Schwenkrolle bei einer sich ändemden Radaufstandskraft tritt zudem ein mehrfaches Überschwingen auf bevor ein Gleichgewichtszustand zwischen der Radaufstandskraft und der Abstützkraft erreicht wird. Ein mehrfaches Überschwingen bis zum Erreichen eines stabilen Rollwinkels während einer Kurvenfahrt führt zu einer geringen Stabilität des Flurförderzeugs.

Die JP 2000-62428 A offenbart ein Flurförderzeug mit einem gefedert aufgehängten Antriebsrad und einer gefedert aufgehängten Schwenkrolle. Die Schwenkrolle ist mittels einer Feder zwischen zwei Lenkern abgestützt. Zwischen einem die Schwenkrolle tragenden Lenker und dem Fahrzeugrahmen ist ein hydraulischer Verriegelungszylinder angeordnet, mit dem die Einfederung der Schwenkrolle blockiert werden kann, um die Stabilität des Flurförderzeugs bei einer Kurvenfahrt zu erhöhen. Der Verriegelungszylinder ist als doppeltwirkender Hydraulikzylinder ausgebildet, dessen Druckräume mittels zweier Leitungen miteinander verbunden sind. Mittels eines Ventils kann die Verbindung der beiden Leitungen hergestellt werden, um die Bewegung der Schwenkrolle zu ermöglichen, bzw. die Verbindung der beiden Leitungen abgesperrt werden, um die Schwenkrolle zu blockieren. An die Leitungen ist über ein in Richtung zu den Leitungen öffnendes Sperrventil ein Ausgleichsbehälter angeschlossen.

Der vorliegenden Erfindung liegt die Aufgabe zugrunde, ein Flurförderzeug der eingangs genannten Gattung zur Verfügung zu stellen, das eine verbesserte Stabilität aufweist.

Diese Aufgabe wird erfindungsgemäß dadurch gelöst, dass die Feder-Dämpfer-Einrichtung ein bei einer Ausfederung und bei einer Einfederung der Schwenkrolle wirksames hydraulisches Dämpfungsmittel aufweist und die Feder-Dämpfer-Einrichtung eine progressive Federkennlinie mit einer beim Einfedern der Schwenkrolle progressiv ansteigenden Abstützkraft der Schwenkrolle und einer beim Ausfedern der Schwenkrolle progressiv abnehmenden Abstützkraft der Schwenkrolle aufweist. Mit einem derartigen Dämpfungsmittel kann die Ausfederungsgeschwindigkeit und die Einfederungsgeschwindigkeit der Schwenkrolle begrenzt werden, wodurch ein kontrolliertes Einfederverhalten und Ausfederverhalten der Schwenkrolle erzielt werden kann. Bei einer Kurvenfahrt oder einem Befahren einer unebenen Fahrbahnoberfläche können hierdurch die Überschwingvorgänge bei einer sich ändernden Radaufstandskraft verbessert werden und ein mehrfaches Überschwingen vermieden werden. Durch eine progressive Federkennlinie der Feder-Dämpfer-Einrichtung kann mit geringem Aufwand eine progressive mit zunehmender Einfederung ansteigende, der Radaufstandskraft entgegenwirkende Abstützkraft der Schwenkrolle erzielt werden, wobei beim Ausfedern der Schwenkrolle die Abstützkraft überproportional abnimmt und beim Einfedern der Schwenkrolle die Abstützkraft überproportional zunimmt. Durch ein derartiges Verhalten der Schwenkrolle kann eine hohe Fahrstabilität des Flurförderzeugs durch geringe Rollwinkel, beispielsweise während einer Kurvenfahrt, und hohe von dem Antriebsrad übertragbare Brems- und Antriebskräfte erzielt werden. Es ergibt sich somit insgesamt eine verbesserte Stabilität und ein verbessertes Fahrverhalten des Flurförderzeugs, wodurch die maximale Fahrgeschwindigkeit des Flurförderzeugs im beladenen und unbeladenen Zustand bei Erhalt der notwendigen Fahrzeugstabilität in allen Fahrzuständen angehoben werden kann.

Gemäß einer bevorzugten Ausführungsform der Erfindung ist das Dämpfungsmittel von zumindest einer beim Einfedern wirksamen Drosseleinrichtung und zumindest einer beim Ausfedern wirksamen Drosseleinrichtung gebildet. Mit Drosseleinrichtungen kann auf einfache Weise ein hydraulisches Dämpfungsmittel zur Verfügung gestellt werden, das bei der Einfederung und bei der Ausfederung der Schwenkrolle eine Dämpfung ermöglicht.

Zweckmäßigerweise weist die Feder-Dämpfer-Einrichtung gemäß einer bevorzugten Ausgestaltungsform der Erfindung einen ersten ölgefüllten Raum, dessen Volumen von der Einfederung bzw. Ausfederung der Schwenkrolle abhängig ist und der mittels einer Drosseleinrichtung mit einem Ausgleichsraum in Verbindung steht, und einen zweiten ölgefüllten Raum auf, dessen Volumen von der Einfederung bzw. Ausfederung der Schwenkrolle abhängig ist und der mittels einer Drosseleinrichtung mit dem ersten Raum und/oder mittels einer Drosseleinrichtung mit dem Ausgleichsraum in Verbindung steht. Mit einer derartigen Anordnung ist es auf einfache Weise möglich, einem beim Einfedern und einen beim Ausfedern wirksamen Raum zur Verfügung zu stellen und somit die Einfederungsgeschwindigkeit sowie die Ausfederungsgeschwindigkeit der Schwenkrolle über entsprechende Drosseleinrichtungen zu dämpfen, wodurch ein beim Einfedern sowie beim Ausfedern der Schwenkrolle wirksames Dämpfungsmittel erzielt wird.

Zweckmäßigerweise steht der erste Raum über eine in Richtung zum ersten Raum öffnende Sperrventileinrichtung, insbesondere ein Rückschlagventil, mit dem Ausgleichsraum in Verbindung. Hierdurch kann erzielt werden, dass beim Ausfedern Druckmittel über die geöffnete Sperrventileinrichtung vom Ausgleichsraum in den ersten Raum strömt und somit die Dämpfung der Ausfederungsgeschwindigkeit über die den zweiten Raum mit dem ersten Raum und/oder dem Ausgleichsraum verbindende Drosseleinrichtungen erfolgt.

Sofern gemäß einer bevorzugten Ausgestaltungsform der Erfindung in dem zweiten Raum ein mit der Schwenkrolle in Wirkverbindung stehender Dämpfungskolben angeordnet ist, kann mit geringem Bauaufwand ein von der Einfederung bzw. Ausfederung der Schwenkrolle abhängiges Volumen des zweiten Raumes erzielt werden.

Eine progressive Federkennlinie und somit ein progressiver Verlauf der Abstützkraft der Schwenkrolle kann gemäß einer bevorzugten Ausführungsform der Erfindung auf einfache Weise erzielt werden, wenn der Ausgleichsraum unter eine Gasvorspannung bringbar ist. Durch die Komprimierung des Gases in dem Ausgleichsraum beim Einfedern der Schwenkrolle kann auf einfache Weise eine progressive Federkraft und somit Abstützkraft der Schwenkrolle erzielt werden. Zudem kann durch Veränderung der Gasvorspannung die Feder-Dämpfer-Einrichtung auf einfache Weise an verschiedene Typen von Flurförderzeugen angepasst werden.

Zweckmäßigerweise ist in dem ersten ölgefüllten Raum eine mit der Schwenkrolle in Wirkverbindung stehende Feder der Feder-Dämpfer-Einrichtung angeordnet. Durch die Anordnung der die Schwenkrolle beaufschlagenden Feder in den ersten Raum ergibt sich ein geringer Bauraumbedarf.

Sofern gemäß einer bevorzugten Weiterbildung der Erfindung eine weitere Feder vorgesehen ist, die ab einer vorgegebenen Einfederung mit der Schwenkrolle in Wirkverbindung bringbar ist, kann mit geringem Aufwand eine progressive Abstützkraft erzielt werden.

Zweckmäßigerweise ist die weitere Feder in dem ersten ölgefüllten Raum angeordnet, wodurch sich ein geringer Bauraumbedarf ergibt.

Besondere Vorteile ergeben sich, wenn der Ausgleichsraum gemäß einer Weiterbildung der Erfindung über ein in Richtung zum Ausgleichsraum öffnendes Sperrventil, insbesondere ein Rückschlagventil, mit einem Behälter in Verbindung steht. Leckagen im ersten Raum, im zweiten Raum sowie im Ausgleichsraum, die bei Ausfedern der Schwenkrolle zu einem Abfall des Gasdruckes unterhalb des Umgebungsdruckes führen, können hierdurch automatisch ausgeglichen werden, wodurch die Feder-Dämpfer-Einrichtung eine hohe Zuverlässigkeit aufweist.

Gemäß einer vorteilhaften Ausgestaltungsform der Erfindung steht die Schwenkrolle mit einer kolbenförmigen Baueinheit in Verbindung, die in einem zylinderförmigen Bauteil längsverschiebbar gelagert ist, in dem der erste Raum, der zweite Raum und der Ausgleichsraum ausgebildet ist. Durch diese Ausgestaltung der Feder-Dämpfer-Einrichtung als zylinderförmige Baugruppe ergibt ich ein geringer Bauaufwand und Bauraumbedarf.

Zweckmäßigerweise ist an dem zylinderförmigen Bauteil ein den ersten Raum und den Ausgleichsraum begrenzendes Bauelement angeordnet ist, in dem der zweite Raum ausgebildet ist. Mit einem derartigen Bauelement können mit geringem Bauaufwand in dem zylinderförmigen Bauteil der erste Raum und der Ausgleichsraum sowie der zweite Raum gebildet werden.

Besondere Vorteile ergeben sich, wenn gemäß einer vorteilhaften Ausführungsform der Erfindung in dem Bauelement die den ersten Raum mit dem Ausgleichsraum verbindende Drosseleinrichtung und/oder die den zweiten Raum mit dem Ausgleichsraum verbindende Drosseleinrichtung und/oder die den zweiten Raum mit dem ersten Raum verbindende Drosseleinrichtung und/oder die den ersten Raum mit dem Ausgleichsraum verbindende Sperrventileinrichtung und/oder das den Ausgleichsraum mit dem Behälter verbindende Sperrventil angeordnet ist. In dem Bauelement können die die entsprechenden Räume verbindenden Drosseleinrichtungen und Sperrventile mit geringem Aufwand angeordnet werden. Durch Ausbildung aller Drosseleinrichtungen und Sperrventile in dem Bauelement kann auf einfache Weise durch Verändern der Drosseleinrichtungen in dem Bauelement die Feder-Dämpfer-Einrichtung an unterschiedliche Typen von Flurförderzeuge angepasst werden.

Ein einfacher Aufbau des zylinderförmigen Bauteils ergibt sich hierbei, wenn das zylinderförmige Bauteil einen den ersten Raum begrenzenden Grundkörper und einen den Ausgleichsraum begrenzenden Deckel aufweist, der mit dem Grundkörper verbindbar ist, wobei zwischen dem Grundkörper und dem Deckel das Bauelement angeordnet und befestigt ist. Das Bauelement kann hierdurch auf einfache Weise zwischen dem Grundkörper und dem Deckel eingespannt werden.

Die den ersten Raum mit dem Ausgleichsraum verbindenden Drosseleinrichtung und/oder Sperrventileinrichtung können auf einfache Weise in dem Bauelement ausgebildet werden, wenn gemäß einer vorteilhaften Ausführungsform in dem Bauelement ein den Ausgleichsraum mit dem ersten Raum verbindender Verbindungskanal ausgebildet ist, in dem die Drosseleinrichtung, insbesondere eine Drossel, angeordnet ist und/oder in dem Bauelement ein den Ausgleichsraum mit dem ersten Raum verbindender Verbindungskanal ausgebildet ist, in dem die Spemrentileinrichtung, insbesondere ein Rückschlagventil, angeordnet ist. Zudem ist es möglich, die Drosseleinrichtung und die Sperrventileinrichtung zu einem Drosselrückschlagventil zusammen zu fassen und in einem Verbindungskanal des Bauelements anzuordnen.

Für die den zweiten Raum mit dem ersten Raum verbindenden Drosseleinrichtung ergibt sich eine einfache Anordnung, wenn in dem Bauelement ein den zweiten Raum mit dem ersten Raum verbindender Verbindungskanal ausgebildet ist, in dem die Drosseleinrichtung, insbesondere eine Drossel, angeordnet ist.

Die den zweiten Raum mit dem Ausgleichsraum verbindende Drosseleinrichtung kann auf einfache Weise vorgesehen werden, wenn der zweite Raum von einer mit dem Ausgleichsraum in Verbindung stehenden bohrungsförmigen Ausnehmung des Bauelements gebildet ist, in der der Dämpfungskolben angeordnet ist, wobei die den zweiten Raum mit dem Ausgleichsraum verbindende Drosseleinrichtung von einem Ringspalt zwischen dem Dämpfungskolben und der Ausnehmung gebildet ist.

Die Verbindung des Ausgleichsraums mit dem Behälter kann mit geringem Bauaufwand hergestellt werden, wenn in dem Bauelement gemäß einer zweckmäßigen Ausgestaltungsform der Erfindung eine Ringnut ausgebildet, die mit einem in dem Deckel ausgebildeten Kanal, der an den Behälter anschließbar ist, in Verbindung steht, wobei in dem Bauelement ein von der Ringnut zu dem Ausgleichsraum geführter Verbindungskanal ausgebildet ist, in dem das Sperrventil, insbesondere ein Rückschlagventil, angeordnet ist.

Eine einfache Verbindung des Dämpfungskolbens mit der Schwenkrolle ergibt sich, wenn zweckmäßigerweise der Dämpfungskolben mittels einer Kolbenstange, die in dem Bauelement geführt ist, mit der kolbenförmigen Baueinheit in Verbindung steht.

Weitere Vorteile und Einzelheiten der Erfindung werden anhand des in den schematischen Figuren dargestellten Ausführungsbeispiels näher erläutert. Dabei zeigt
- Figur 1: ein erfindungsgemäßes Flurförderzeug in einer Seitenansicht,
- Figur 2: einen Antriebsteil eines erfindungsgemäßen Flurförderzeugs in einer schematischen Rückansicht und
- Figur 3: eine Schwenkrolle in einem Längsschnitt.

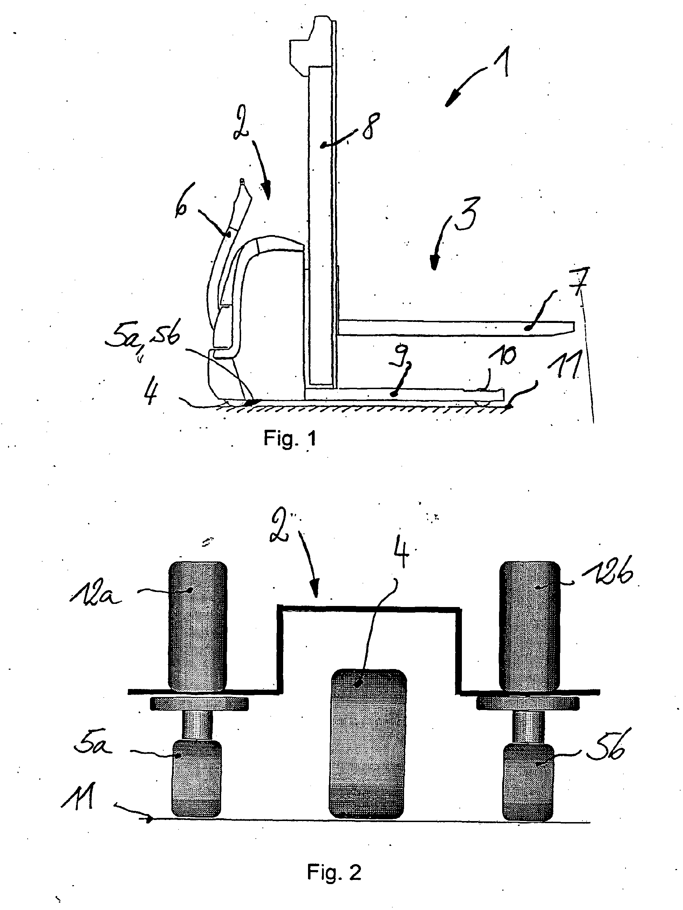

In der Figur 1 ist ein als deichselgeführter Hochhub-Gabelhubwagen ausgebildetes Flurförderzeug 1 dargestellt, das einen Antriebsteil 2 und einen Lastteil 3 umfasst. Das Antriebsteil 2 weist bezüglich der Längsachse des Flurförderzeugs 1 ein mittig angeordnetes Antriebsrad 4 und zwei seitlich angeordnete Schwenkrollen 5a, 5b auf. Das Antriebsrad 4 kann mittels einer Deichsel 6 gelenkt werden. Das Lastteil 3 umfasst Tragarme 7, die an einem Hubgerüst 8 auf- und abbewegbar angeordnet sind. Der Lastteil 3 umfasst weiterhin zwei Radarme 9, in denen jeweils eine als Einfachrolle oder Tandemrolle ausgebildete Lastrolle 10 gelagert ist. Das Flurförderzeug 1 stützt sich somit mittels des Antriebsrades 4, den Schwenkrollen 5a, 5b und den Lastrollen 10 auf einer Fahrbahn 11 ab.

Die Figur 2 zeigt den schematischen Aufbau des Antriebsteils 2 des Flurförderzeugs 1 gemäß der Figur 1. Das lenkbare Antriebsrad 4 ist mittig zur Längsachse des Flurförderzeugs auf nicht mehr dargestellte Weise am Antriebsteil 2 befestigt. Zu beiden Seiten des Antriebsrades 4 ist beabstandet von der Längsachse des Flurförderzeugs jeweils eine Schwenkrolle 5a, 5b am Antriebsteil 2 befestigt. Die Schwenkrolle 5a, 5b ist hierbei jeweils mittels einer Feder-Dämpfer-Einrichtung 12a 12b auf der Fahrbahn 11 abgestützt.

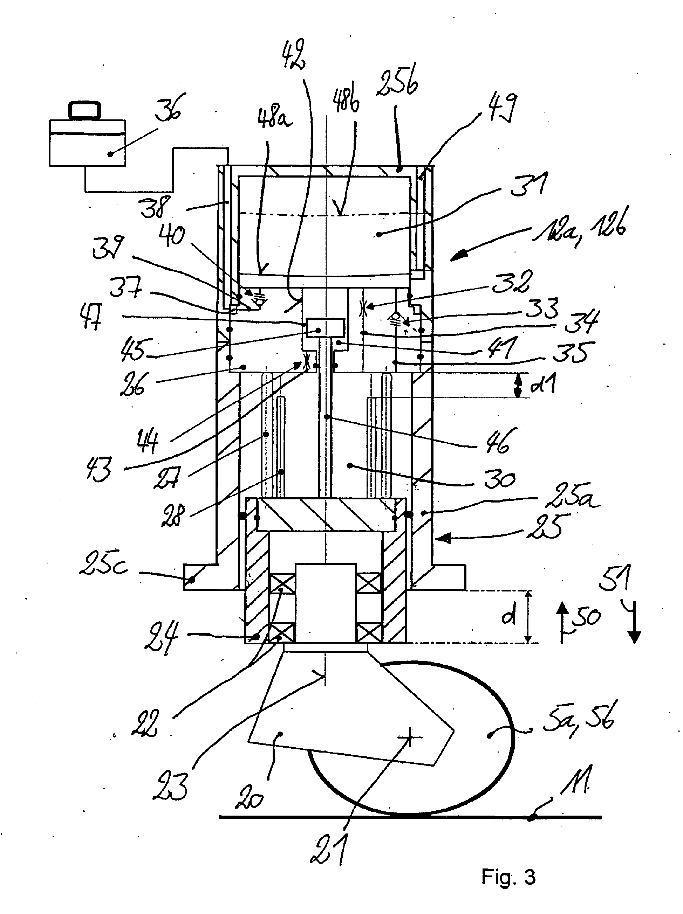

In der Figur 3 ist die Schwenkrolle 5a, 5b mit einer Feder-Dämpfer-Einrichtung 12a, 12b im Längsschnitt dargestellt. Die Schwenkrolle 5a, 5b ist in einer Aufhängung 20 um eine horizontale Achse 21 drehbar gelagert. Die Aufhängung 20 ist mittels einer Lagerung 22, insbesondere einer Wälzlagerung, um eine vertikale Achse 23 drehbar in einer kolbenförmigen Baueinheit 24 gelagert. Die kolbenförmige Baueinheit 24 ist in einem zylinderförmigen Bauteil 25 der Feder-Dämpfer-Einrichtung 12a, 12b in Richtung der vertikalen Achse 23 längsverschlebbar gelagert.

Das zylinderförmige Bauteil 25 besteht aus einem Grundkörper 25a, der im unteren Bereich mit einem Flansch 25c zur Befestigung am Antriebsteil 2 versehen ist, und einem Deckel 25b, der auf nicht mehr dargestellte Weise mit dem Grundkörper 25a verbunden ist. Der Grundkörper 25a und der Deckel 25b sind an dem einander zugewandten Bereich mit jeweils einem von einem Bohrungsabsatz gebildeten Flansch versehen, wobei zwischen den Flanschen ein Bauelement 26 angeordnet und durch die Verbindung des Deckels 25b mit dem Grundkörper 25a befestigt ist.

In dem Grundkörper 25a ist von dem kolbenförmigen Bauteil 24 und dem Bauelement 26 ein erster Raum 30 gebildet, in dem eine die Schwenkrolle 5a, 5b beaufschlagende Feder 27 angeordnet ist. In dem ersten Raum 30 ist eine weitere Feder 28 angeordnet, die von dem Bauelement 26 beabstandet ist und ab einer von diesem Anstand vorgegebenen Einfederung d1 mit der Schwenkrolle 5a, 5b in Wirkverbindung bringbar ist.

Der Deckel 25b und das Bauelement 26 begrenzen einen Ausgleichsraum 31, der über eine als Drossel ausgebildete Drosseleinrichtung 32 und eine als in Richtung zum ersten Raum 30 öffnende, als federbelastetes Rückschlagventil ausgebildete Sperrventileinrichtung 33 mit dem ersten Raum 30 verbunden ist. Die Drosseleinrichtung 32 ist hierbei in einem von dem Ausgleichsraum 31 zu dem ersten Raum 30 geführten Verbindungsleitung 34 angeordnet, die in dem Bauelement 26 ausgebildet ist. In einem weiteren in dem Bauelement 26 angeordneten Verbindungskanal 35, der den Ausgleichsraum 31 mit dem ersten Raum 30 verbindet, ist die Sperrventileinrichtung 33 angeordnet.

Der Ausgleichsraum 31 steht weiterhin mit einem Behälter 36 in Verbindung. Hierzu ist an dem Bauelement 26 eine Ringnut 37 ausgebildet, die mit einem in dem Deckel 25b ausgebildeten Kanal 38 in Verbindung steht, der an den Behälter 36 angeschlossen ist. In dem Bauelement 26 ist ein die Ringnut 37 mit dem Ausgleichsraum 31 verbindender Verbindungskanal 39 ausgebildet, in dem ein als federbelastetes Rückschlagventil ausgebildetes, in Richtung zum Ausgleichsraum 31 öffnendes Sperrventil 40 angeordnet ist.

In dem Bauelement 26 ist ein zweiter Raum 41 ausgebildet, der von einer mit dem Ausgleichsraum 31 in Verbindung stehenden bohrungsförmigen Ausnehmung 42 gebildet ist. Im Bauelement 26 ist weiterhin ein Verbindungskanal 43 angeordnet, der vom Bohrungsende der Ausnehmung 42 zum ersten Raum 30 geführt ist. In diesem Verbindungskanal 43 ist eine als Drossel ausgebildete Drosseleinrichtung 44 angeordnet.

In dem zweiten Raum 41 ist ein Dämpfungskolben 45 angeordnet, der über eine in dem Bauelement 26 geführte Kolbenstange 46 mit dem kolbenförmigen Bauteil 24 und somit der Schwenkrolle 5a, 5b verbunden ist. Zwischen der bohrungsförmigen Ausnehmung 42 und dem Dämpfungskolben 45 ist ein Ringspalt ausgebildet, der eine den zweiten Raum 41 mit dem Ausgleichsraum 31 verbindende Drosseleinrichtung 47 bildet.

In der dargestellten Ausgangsstellung der Schwenkrolle 5a, 5b ist der erste Raum 30 und der zweite Raum 41 vollständig mit Druckmittel, beispielsweise Öl, gefüllt. Der Ausgleichsraum 31 ist bis zum Niveau 48a mit Druckmittel gefüllt. Der Ausgleichsraum 31 ist weiterhin unter eine Gasvorspannung bringbar. Hierzu ist im Deckel 25a ein mit dem Ausgleichsraum 31 in Verbindung stehender Kanal 49 vorgesehen.

In der dargestellten Ausgangsstellung ist die Abstützkraft der Schwenkrolle 5a, 5b konstant entsprechend der für das Flurförderzeug vorgegebenen, mittels der Federn 27, 28 und dem Gasdruck in dem Ausgleichsraum 31 einstellbaren Einfederung d.

Bei einer Einfederung der Schwenkrolle 5a, 5b in Richtung 50 der Figur 3 durch eine erhöhte Radaufstandskraft wird das kolbenförmige Bauteil 24 nach oben beaufschlagt, wodurch Druckmittel aus dem ersten Raum 30 über die Drosseleinrichtung 44 in den zweiten Raum 41 und über die Drosseleinrichtung 32 in den Ausgleichsraum 31 strömt. Bei maximaler Einfederung d befindet sich das Druckmittel im Ausgleichsraum 31 auf dem Niveau 48b. Durch die Zunahme des Druckmittels im Ausgleichsraum 31 steigt die Gasdruckkraft im Ausgleichsraum 31 an. Durch die Federn 27, 28 sowie dem Gasdruck im Ausgleichsraum 31 wird mit zunehmender Einfederung eine progressive Federkennlinie und somit eine progressiv ansteigende Abstützkraft erzielt. Durch die Wirkung der Drosseleinrichtung 32 und 44 wird hierbei die Einfederungsgeschwindigkeit der Schwenkrolle 5a, 5b gedämpft und ein mehrfaches Überschwingen bis zum Erreichen eines Gleichgewichtszustands zwischen der Abstützkraft und der Radaufstandskraft vermieden, wodurch sich ein kontrolliertes Einfederungsverhalten der Schwenkrolle 5a, 5b ergibt. Hierdurch kann insbesondere bei einer Kurvenfahrt des Flurförderzeugs durch ein geringes Einfedern der kurvenäußeren Schwenkrolle ein kleiner Rollwinkel um die Fahrzeuglängsachse bei hoher Fahrstabilität des Flurförderzeugs erzielt werden.

Bei einer Ausfederung der Schwenkrolle 5a, 5b in Richtung 51 der Figur 3 aufgrund einer abnehmenden Radaufstandskraft wird das kolbenförmige Bauteil 24 nach in der Figur 3 unten beaufschlagt. Druckmittel strömt hierbei aus dem Ausgleichsraum 31 über die geöffnete Sperrventileinrichtung 33 in den ersten Raum 30. Zur Dämpfung der Ausfederungsgeschwindigkeit der Schwenkrolle 5a, 5b ist der Dämpfungskolben 45 vorgesehen, der beim Ausfedern über die Kolbenstange 46 nach in der Figur 3 unten beaufschlagt wird und Druckmittel aus dem zweiten Raum 41 über die Drosseleinrichtung 44 in den ersten Raum 30 sowie über die als Ringspalt ausgebildete Drosseleinrichtung 47 in den Ausgleichsraum 31 verdrängt. Hierdurch kann eine hohe Ausfederungsgeschwindigkeit vermieden und Kavitation des Druckmittels beim Überströmen von dem Ausgleichsraum 31 in den ersten Raum 30 vermeiden werden. Durch den Dämpfungskolben 45 kann somit ein kontrolliertes Ausfederungsverhalten der Schwenkrolle 5a, 5b erzielt werden. Hierdurch kann insbesondere während einer Kurvenfahrt des Flurförderzeugs ein mehrmaliges Überschwingen vermieden werden und somit ein stabiles Fahrverhalten des Flurförderzeugs mit geringem Rollwinkel erzielt werden. Durch das aus dem Ausgleichsraum 31 strömende Druckmittel nimmt der Gasdruck im Ausgleichsraum 31 progressiv ab, so dass beim Ausfedern die Abstützkraft der Schwenkrolle 5a, 5b progressiv abnimmt. Hierdurch wird während einer Kurvenfahrt erzielt, dass an der kurveninneren Schwenkrolle eine geringe Abstützkraft auftritt, wodurch eine hohe Radlast des Antriebsrades zur Verfügung steht. An dem Antriebsrad können somit hohe Brems- und Antriebskräfte übertragen werden, wodurch das Flurförderzeug insbesondere bei einer Kurvenfahrt eine hohe Fahrstabilität aufweist.

Sofern bedingt durch Leckage an der Feder-Dämpfer-Einrichtung 12a, 12b das Ölvolumen im Ausgleichsraum 31 abnimmt, fällt beim Ausfedem der Schwenkrolle 5a, 5b der im Ausgleichsraum 31 anstehende Gasdruck unter den Umgebungsdruck. Über das Sperrventil 40 kann hierbei automatisch Druckmittel aus dem Behälter 36 in den Ausgleichsraum 31 zum Ausgleich der Leckage nachströmen.

## Patentansprüche

1. Flurförderzeug (1), insbesondere Gabelhubwagen, mit einem Antriebsteil (2) und einem Lastteil (3), wobei im Bereich des Lastteils (3) zumindest zwei Lastrollen (10) und im Bereich des Antriebsteils (2) zumindest ein lenkbares Antriebsrad (4) und mindestens eine Schwenkrolle (5a; 5b) angeordnet sind, die um eine vertikale Achse (23) drehbar und vertikal bewegbar angeordnet ist und mittels einer Feder-Dämpfer-Einrichtung (12a; 12b) abgestützt ist, **dadurch gekennzeichnet, dass** die Feder-Dämpfer-Einrichtung (12a; 12b) ein bei einer Ausfederung und bei einer Einfederung der Schwenkrolle (5a; 5b) wirksames hydraulisches Dämpfungsmittel aufweist und die Feder-Dämpfer-Einrichtung (12a; 12b) eine progressive Federkennlinie mit einer beim Einfedern der Schwenkrolle (5a; 5b) progressiv ansteigenden Abstützkraft der Schwenkrolle (5a; 5b) und einer beim Ausfedern der Schwenkrolle (5a; 5b) progressiv abnehmenden Abstützkraft der Schwenkrolle (5a; 5b) aufweist.

2. Flurförderzeug nach Anspruch 1, **dadurch gekennzeichnet, dass** das Dämpfungsmittel von zumindest einer beim Einfedern wirksamen Drosseleinrichtung (32; 44) und zumindest einer beim Ausfedem wirksamen Drosseleinrichtung (44; 47) gebildet ist.

3. Flurförderzeug nach Anspruch 1 oder 2, **dadurch gekennzeichnet, dass** die Feder-Dämpfer-Einrichtung (12a; 12b) einen ersten ölgefüllten Raum (30), dessen Volumen von der Einfederung bzw. Ausfederung der Schwenkrolle (5a; 5b) abhängig ist und der mittels einer Drosseleinrichtung (32) mit einem Ausgleichsraum (31) in Verbindung steht, und einen zweiten ölgefüllten Raum (41) aufweist, dessen Volumen von der Einfederung bzw. Ausfederung der Schwenkrolle (5a; 5b) abhängig ist und der mittels einer Drosseleinrichtung (44) mit dem ersten Raum (30) und/oder mittels einer Drosseleinrichtung (47) mit dem Ausgleichsraum (31) in Verbindung steht.

4. Flurförderzeug nach Anspruch 3, **dadurch gekennzeichnet, dass** der erste Raum (30) über eine in Richtung zum ersten Raum (30) öffnende Sperrventileinrichtung (33), insbesondere ein Rückschlagventil, mit dem Ausgleichsraum (31) in Verbindung steht.

5. Flurförderzeug nach Anspruch 3 oder 4, **dadurch gekennzeichnet, dass** in dem zweiten Raum (41) ein mit der Schwenkrolle (5a; 5b) in Wirkverbindung stehender Dämpfungskolben (45) angeordnet ist.

6. Flurförderzeug nach einem der Ansprüche 3 bis 5, **dadurch gekennzeichnet, dass** der Ausgleichsraum (31) unter eine Gasvorspannung bringbar ist.

7. Flurförderzeug nach einem der Ansprüche 3 bis 6, **dadurch gekennzeichnet, dass** in dem ersten ölgefüllten Raum (30) eine mit der Schwenkrolle (5a; 5b) in Wirkverbindung stehende Feder (27) der Feder-Dämpfer-Einrichtung (12a; 12b) angeordnet ist.

8. Flurförderzeug nach einem der Ansprüche 1 bis 7, **dadurch gekennzeichnet, dass** eine weitere Feder (28) vorgesehen ist, die ab einer vorgegebenen Einfederung (d1) mit der Schwenkrolle (5a; 5b) in Wirkverbindung bringbar ist.

9. Flurförderzeug nach einem der Ansprüche 3 bis 7 in Verbindung mit Anspruch 8, **dadurch gekennzeichnet, dass** die weitere Feder (28) in dem ersten ölgefüllten Raum (30) angeordnet ist.

10. Flurförderzeug nach einem der Ansprüche 3 bis 9, **dadurch gekennzeichnet, dass** der Ausgleichsraum (31) über ein in Richtung zum Ausgleichsraum (31) öffnendes Sperrventil (40), insbesondere ein Rückschlagventil, mit einem Behälter (36) in Verbindung steht.

11. Flurförderzeug nach einem der Ansprüche 3 bis 10, **dadurch gekennzeichnet, dass** die Schwenkrolle (5a; 5b) mit einer kolbenförmigen Baueinheit (24) in Verbindung steht, die in einem zylinderförmigen Bauteil (25) längsverschiebbar gelagert ist, in dem der erste Raum (30), der zweite Raum (41) und der Ausgleichsraum (31) ausgebildet ist.

12. Flurförderzeug nach Anspruch 11, **dadurch gekennzeichnet, dass** in dem zylinderförmigen Bauteil (25) ein den ersten Raum (30) und den Ausgleichsraum (31) begrenzendes Bauelement (26) angeordnet ist, in dem der zweite Raum (41) ausgebildet ist.

13. Flurförderzeug nach Anspruch 12, **dadurch gekennzeichnet, dass** in dem Bauelement (26) die den ersten Raum (30) mit dem Ausgleichsraum (31) verbindende Drosseleinrichtung (32) und/oder die den zweiten Raum (41) mit dem Ausgleichsraum (31) verbindende Drosseleinrichtung (47) und/oder die den zweiten Raum (41) mit dem ersten Raum (31) verbindende Drosseleinrichtung (44) und/oder die den ersten Raum (30) mit dem Ausgleichsraum (31) verbindende Spenventileinrichtung (33) und/oder das den Ausgleichsraum (31) mit dem Behälter (36) verbindende Sperrventil (40) angeordnet ist

14. Flurförderzeug nach Anspruch 12 oder 13, **dadurch gekennzeichnet, dass** das zylinderförmige Bauteil (25) einen den ersten Raum (30) begrenzenden Grundkörper (25a) und einen den Ausgleichsraum (31) begrenzenden Deckel (25b) aufweist, der mit dem Grundkörper (25a) verbindbar ist, wobei zwischen dem Grundkörper (25a) und dem Deckel (25b) das Bauelement (26) angeordnet und befestigt ist.

15. Flurförderzeug nach Anspruch 13 oder 14, **dadurch gekennzeichnet, dass** in dem Bauelement (26) ein den Ausgleichsraum (31) mit dem ersten Raum (30) verbindender Verbindungskanal (34) ausgebildet ist, in dem die Drosseleinrichtung (32), insbesondere eine Drossel, angeordnet ist.

16. Flurförderzeug nach einem der Ansprüche 13 bis 15, **dadurch gekennzeichnet, dass** in dem Bauelement (26) ein den Ausgleichsraum (31) mit dem ersten Raum (30) verbindender Verbindungskanal (35) ausgebildet ist, in dem die Sperrventileinrichtung (33), insbesondere ein Rückschlagventil, angeordnet ist.

17. Flurförderzeug nach einem der Ansprüche 13 bis 16, **dadurch gekennzeichnet, dass** in dem Bauelement (26) ein den zweiten Raum (41) mit dem ersten Raum (31) verbindender Verbindungskanal (43) ausgebildet ist, in dem die Drosseleinrichtung (44), insbesondere eine Drossel, angeordnet ist.

18. Flurförderzeug nach einem der Ansprüche 13 bis 17, **dadurch gekennzeichnet, dass** der zweite Raum (41) von einer mit dem Ausgleichsraum (31) in Verbindung stehenden bohrungsförmigen Ausnehmung (42) des Bauelements (26) gebildet ist, in der der Dämpfungskolben (45) angeordnet ist, wobei die den zweiten Raum (41) mit dem Ausgleichsraum (31) verbindende Drosseleinrichtung (47) von einem Ringspalt zwischen dem Dämpfungskolben (45) und der Ausnehmung (42) gebildet ist.

19. Flurförderzeug nach einem der Ansprüche 13 bis 18, **dadurch gekennzeichnet, dass** in dem Bauelement (26) eine Ringnut (37) ausgebildet, die mit einem in dem Deckel (25b) ausgebildeten Kanal (38), der an den Behälter (36) anschließbar ist, in Verbindung steht, wobei in dem Bauelement (26) ein von der Ringnut (37) zu dem Ausgleichsraum (31) geführter Verbindungskanal (39) ausgebildet ist, in dem das Sperrventil (40), insbesondere ein Rückschlagventil, angeordnet ist.

20. Flurförderzeug nach einem der Ansprüche 5 bis 19, **dadurch gekennzeichnet, dass** der Dämpfungskolben (45) mittels einer Kolbenstange (46) mit der Schwenkrolle (5a; 5b), insbesondere der kolbenförmigen Baueinheit (24), in Verbindung steht.

## Claims

1. Industrial truck (1), in particular forklift truck, with a drive part (2) and a load part (3), wherein at least two load rollers (10) are arranged in the region of the load part (3) and at least one steerable drive wheel (4) and at least one pivot roller (5a; 5b) are arranged in the region of the drive part (2), said pivot roller being arranged so as to be rotatable about a vertical axis (23) and so as to be movable vertically and is supported by means of a spring damper device (12a; 12b), **characterized in that** the spring damper device (12a; 12b) has a hydraulic damping means which is effective during a rebound and during a deflection of the pivot roller (5a; 5b), and the spring damper device (12a; 12b) has a progressive spring characteristic with a supporting force for the pivot roller (5a; 5b) that rises progressively during the deflecting of the pivot roller (5a; 5b) and a supporting force for the pivot roller (5a; 5b) that decreases progressively during the rebounding of the pivot roller (5a; 5b).

2. Industrial truck according to Claim 1, **characterized in that** the damping means is formed by at least one throttle device (32; 44) which is effective during the deflecting and at least one throttle device (44; 47) which is effective during the rebounding.

3. Industrial truck according to Claim 1 or 2, **characterized in that** the spring damper device (12a; 12b) has a first oil-filled space (30), the volume of which is dependent on the deflection and rebound of the pivot roller (5a; 5b) and which is connected to an equalizing space (31) by means of a throttle device (32), and has a second oil-filled space (41), the volume of which is dependent on the deflection and rebound of the pivot roller (5a; 5b) and which is connected to the first space (30) by means of a throttle device (44) and/or to the equalizing space (31) by means of a throttle device (47).

4. Industrial truck according to Claim 3, **characterized in that** the first space (30) is connected to the equalizing space (31) via a shut-off valve device (33) opening in the direction of the first space (30), in particular a non return valve.

5. Industrial truck according to Claim 3 or 4, **characterized in that** a damping piston (45) which is operatively connected to the pivot roller (5a; 5b) is arranged in the second space (41).

6. Industrial truck according to one of Claims 3 to 5, **characterized in that** the equalizing space (31) can be brought under a gas prestress.

7. Industrial truck according to one of Claims 3 to 6, **characterized in that** a spring (27) of the spring damper device (12a; 12b), which spring is operatively connected to the pivot roller (5a; 5b), is arranged in the first oil-filled space (30).

8. Industrial truck according to one of Claims 1 to 7, **characterized in that** a further spring (28) is provided which can be brought into operative connection with the pivot roller (5a; 5b) from a predetermined deflection (d1).

9. Industrial truck according to one of Claims 3 to 7 in conjunction with Claim 8, **characterized in that** the further spring (28) is arranged in the first oil-filled space (30).

10. Industrial truck according to one of Claims 3 to 9, **characterized in that** the equalizing space (31) is connected to a container (36) via a shut-off valve (40) opening in the direction of the equalizing space (31), in particular a non-return valve.

11. Industrial truck according to one of Claims 3 to 10, **characterized in that** the pivot roller (5a; 5b) is connected to a piston-shaped construction unit (24) which is mounted in a longitudinally displaceable manner in a cylindrical component (25) in which the first space (30), the second space (41) and the equalizing space (31) are formed.

12. Industrial truck according to Claim 11, **characterized in that** a structural element (26) which delimits the first space (30) and the equalizing space (31) and in which the second space (41) is formed is arranged in the cylindrical component (25).

13. Industrial truck according to Claim 12, **characterized in that** the throttle device (32) connecting the first space (30) to the equalizing space (31) and/or the throttle device (47) connecting the second space (41) to the equalizing space (31) and/or the throttle device (44) connecting the second space (41) to the first space (31) and/or the shut-off valve device (33) connecting the first space (30) to the equalizing space (31) and/or the shut-off valve (40) connecting the equalizing space (31) to the container (36) are/is arranged in the structural element (26).

14. Industrial truck according to Claim 12 or 13, **characterized in that** the cylindrical component (25) has a basic body (25a) delimiting the first space (30) and a cover (25b) which delimits the equalizing space (31) and is connectable to the basic body (25a), wherein the structural element (26) is arranged and fastened between the basic body (25a) and the cover (25b).

15. Industrial truck according to Claim 13 or 14, **characterized in that** a connecting channel (34) which connects the equalizing space (31) to the first space (30) and in which the throttle device (32), in particular a throttle, is arranged is formed in the structural element (26).

16. Industrial truck according to one of Claims 13 to 15, **characterized in that** a connecting channel (35) which connects the equalizing space (31) to the first space (30) and in which the shut-off valve device (33), in particular a non-return valve, is arranged is formed in the structural element (26).

17. Industrial truck according to one of Claims 13 to 16, **characterized in that** a connecting channel (43) which connects the second space (41) to the first space (31) and in which the throttle device (44), in particular a throttle, is arranged is formed in the structural element (26).

18. Industrial truck according to one of Claims 13 to 17, **characterized in that** the second space (41) is formed by a bore-shaped recess (42) of the structural element (26), which recess is connected to the equalizing space (31) and in which the damping piston (45) is arranged, wherein the throttle device (47) connecting the second space (41) to the equalizing space (31) is formed by an annular gap between the damping piston (45) and the recess (42).

19. Industrial truck according to one of Claims 13 to 18, **characterized in that** an annular groove (37) which is connected to a channel (38), which is formed in the cover (25b) and is connectable to the container (36), is formed in the structural element (26), wherein a connecting channel (39) which leads from the annular groove (37) to the equalizing space (31) and in which the shut-off valve (40), in particular a non-return valve, is arranged is formed in the structural element (26).

20. Industrial truck according to one of Claims 5 to 19, **characterized in that** the damping piston (45) is connected to the pivot roller (5a; 5b), in particular to the piston-shaped construction unit (24), by means of a piston rod (46).

## Revendications

1. Chariot de manutention (1), en particulier chariot élévateur à fourche, comprenant une partie d'entraînement (2) et une partie de charge (3), au moins deux galets de charge (10) étant disposés dans la région de la partie de charge (3), et au moins une roue d'entraînement dirigeable (4) et au moins un galet pivotant (5a ; 5b) étant disposés dans la région de la partie d'entraînement (2), lequel galet pivotant est disposé de manière déplaçable verticalement et de manière à pouvoir tourner autour d'un axe vertical (23), et est supporté au moyen d'un dispositif ressort-amortisseur (12a ; 12b), **caractérisé en ce que** le dispositif ressort-amortisseur (12a ; 12b) comprend un moyen d'amortissement hydraulique agissant lors d'un débattement et lors d'une compression du galet pivotant (5a ; 5b), et le dispositif ressort-amortisseur (12a ; 12b) présente une courbe caractéristique de ressort progressive avec une force d'appui du galet pivotant (5a ; 5b) augmentant progressivement lors de la compression du galet pivotant (5a ; 5b) et avec une force d'appui du galet pivotant (5a ; 5b) diminuant progressivement lors du débattement du galet pivotant (5a ; 5b).

2. Chariot de manutention selon la revendication 1, **caractérisé en ce que** le moyen d'amortissement est formé par au moins un dispositif d'étranglement (32 ; 44) agissant lors de la compression et par au moins un dispositif d'étranglement (44 ; 47) agissant lors du débattement.

3. Chariot de manutention selon la revendication 1 ou 2, **caractérisé en ce que** le dispositif ressort-amortisseur (12a ; 12b) comprend un premier espace rempli d'huile (30), dont le volume est dépendant de la compression ou du débattement du galet pivotant (5a ; 5b) et qui est en liaison avec un espace de compensation (31) au moyen d'un dispositif d'étranglement (32), et comprend un deuxième espace rempli d'huile (41), dont le volume est dépendant de la compression ou du débattement du galet pivotant (5a ; 5b) et qui est en liaison avec le premier espace (30) au moyen d'un dispositif d'étranglement (44) et/ou avec l'espace de compensation (31) au moyen d'un dispositif d'étranglement (47).

4. Chariot de manutention selon la revendication 3, **caractérisé en ce que** le premier espace (30) est en liaison avec l'espace de compensation (31) par le biais d'un dispositif de soupape d'arrêt (33) s'ouvrant en direction du premier espace (30), en particulier par le biais d'une soupape anti-retour.

5. Chariot de manutention selon la revendication 3 ou 4, **caractérisé en ce qu'**un piston d'amortissement (45) en liaison fonctionnelle avec le galet pivotant (5a ; 5b) est disposé dans le deuxième espace (41).

6. Chariot de manutention selon l'une quelconque des revendications 3 à 5, **caractérisé en ce que** l'espace de compensation (31) peut être amené à présenter une précontrainte de gaz.

7. Chariot de manutention selon l'une quelconque des revendications 3 à 6, **caractérisé en ce qu'**un ressort (27), en liaison fonctionnelle avec le galet pivotant (5a ; 5b), du dispositif ressort-amortisseur (12a ; 12b) est disposé dans le premier espace rempli d'huile (30).

8. Chariot de manutention selon l'une quelconque des revendications 1 à 7, **caractérisé en ce qu'**un ressort supplémentaire (28) est prévu, lequel peut être amené en liaison fonctionnelle avec le galet pivotant (5a ; 5b) à partir d'une compression prédéfinie (d1).

9. Chariot de manutention selon l'une quelconque des revendications 3 à 7 en association avec la revendication 8, **caractérisé en ce que** le ressort supplémentaire (28) est disposé dans le premier espace rempli d'huile (30).

10. Chariot de manutention selon l'une quelconque des revendications 3 à 9, **caractérisé en ce que** l'espace de compensation (31) est en liaison avec un récipient (36) par le biais d'une soupape d'arrêt (40) s'ouvrant en direction de l'espace de compensation (31), en particulier par le biais d'une soupape anti-retour.

11. Chariot de manutention selon l'une quelconque des revendications 3 à 10, **caractérisé en ce que** le galet pivotant (5a ; 5b) est en liaison avec une unité structurale en forme de piston (24) qui est montée de manière déplaçable longitudinalement dans une partie structurale en forme de cylindre (25) dans laquelle le premier espace (30), le deuxième espace (41) et l'espace de compensation (31) sont réalisés.

12. Chariot de manutention selon la revendication 11, **caractérisé en ce qu'**un élément structural (26) délimitant le premier espace (30) et l'espace de compensation (31) est disposé dans la partie structurale en forme de cylindre (25), dans lequel élément structural est réalisé le deuxième espace (41).

13. Chariot de manutention selon la revendication 12, **caractérisé en ce que** le dispositif d'étranglement (32) reliant le premier espace (30) à l'espace de compensation (31) et/ou le dispositif d'étranglement (47) reliant le deuxième espace (41) à l'espace de compensation (31) et/ou le dispositif d'étranglement (44) reliant le deuxième espace (41) au premier espace (31) et/ou le dispositif de soupape d'arrêt (33) reliant le premier espace (30) à l'espace de compensation (31) et/ou la soupape d'arrêt (40) reliant l'espace de compensation (31) au récipient (36) sont disposés dans l'élément structural (26).

14. Chariot de manutention selon la revendication 12 ou 13, **caractérisé en ce que** la partie structurale en forme de cylindre (25) comprend un corps de base (25a) délimitant le premier espace (30) et un couvercle (25b) délimitant l'espace de compensation (31), lequel couvercle peut être relié au corps de base (25a), l'élément structural (26) étant disposé et fixé entre le corps de base (25a) et le couvercle (25b).

15. Chariot de manutention selon la revendication 13 ou 14, **caractérisé en ce qu'**un canal de liaison (34) reliant l'espace de compensation (31) au premier espace (30) est réalisé dans l'élément structural (26), dans lequel canal de liaison est disposé le dispositif d'étranglement (32), en particulier un étranglement.

16. Chariot de manutention selon l'une quelconque des revendications 13 à 15, **caractérisé en ce qu'**un canal de liaison (35) reliant l'espace de compensation (31) au premier espace (30) est réalisé dans l'élément structural (26), dans lequel canal de liaison est disposé le dispositif de soupape d'arrêt (33), en particulier une soupape anti-retour.

17. Chariot de manutention selon l'une quelconque des revendications 13 à 16, **caractérisé en ce qu'**un canal de liaison (43) reliant le deuxième espace (41) au premier espace (31) est réalisé dans l'élément structural (26), dans lequel canal de liaison est disposé le dispositif d'étranglement (44), en particulier un étranglement.

18. Chariot de manutention selon l'une quelconque des revendications 13 à 17, **caractérisé en ce que** le deuxième espace (41) est formé par un évidement en forme d'alésage (42) de l'élément structural (26) en liaison avec l'espace de compensation (31), dans lequel évidement est disposé le piston d'amortissement (45), le dispositif d'étranglement (47) reliant le deuxième espace (41) à l'espace de compensation (31) étant formé par un interstice annulaire entre le piston d'amortissement (45) et l'évidement (42).

19. Chariot de manutention selon l'une quelconque des revendications 13 à 18, **caractérisé en ce qu'**une rainure annulaire (37) est réalisée dans l'élément structural (26), laquelle est en liaison avec un canal (38) réalisé dans le couvercle (25b), lequel canal peut être raccordé au récipient (36), un canal de liaison (39) menant de la rainure annulaire (37) à l'espace de compensation (31) étant réalisé dans l'élément structural (26), dans lequel canal de liaison est disposée la soupape d'arrêt (40), en particulier une soupape anti-retour.

20. Chariot de manutention selon l'une quelconque des revendications 5 à 19, **caractérisé en ce que** le piston d'amortissement (45) est en liaison avec le galet pivotant (5a ; 5b), en particulier avec l'unité structurale en forme de piston (24), au moyen d'une tige de piston (46).
